# EUROPÄISCHE PATENTSCHRIFT

(11) **EP 3 622 029 B1**
(45) Veröffentlichungstag und Bekanntmachung des Hinweises auf die Patenterteilung: **22.03.2023**
(21) Anmeldenummer: 18721406.9
(22) Anmeldetag: 09.05.2018
(51) Int. Cl.: C09D 183/08, C03C 17/30, C09D 5/00, C09D 183/14

(54) **WÄSSRIGE VORBEHANDLUNG FÜR VERKLEBUNGEN MIT ERHÖHTER HITZESTABILITÄT**
AQUEOUS PRETREATMENT FOR BONDS WITH AN ENHANCED HEAT STABILITY
TRAITEMENT PRÉALABLE AQUEUX POUR LES COLLAGES TRÈS THERMOSTABLES

(30) Priorität: 09.05.2017 EP 17170160
(43) Veröffentlichungstag der Anmeldung: 18.03.2020
(73) Patentinhaber: Sika Technology AG, 6340 Baar (CH)
(72) Erfinder: DOHNER, Reto, 8005 Zürich (CH); FORNERA, Sara, 8057 Zürich (CH)
(74) Vertreter: Sika Patent Attorneys
(86) Internationale Anmeldenummer: PCT/EP2018/061967
(87) Internationale Veröffentlichungsnummer: WO 2018/206623

(56) Entgegenhaltungen:
- EP-A1- 1 894 966
- EP-A1- 2 128 103
- EP-A1- 2 762 535
- WO-A1-00/29496
- WO-A1-2006/010388
- WO-A2-2008/041976
- WO-A2-2008/061556
- DE-A1- 3 407 087
- US-A1- 2002 123 592

## Beschreibung

### Technisches Gebiet

Die Erfindung betrifft eine Zusammensetzung, insbesondere eine wässrige ein- oder zweikomponentige Zusammensetzung, die als Haftvermittlerzusammensetzung geeignet ist, ein Verfahren zur Herstellung der Zusammensetzung und deren Verwendung.

### Stand der Technik

Kleben ist eine breit eingesetzte Verbindungstechnologie. Einige Substrate (Klebeuntergründe) können aber hierbei problematisch sein, da sie mit gewissen Klebstoffen keine oder ungenügende Haftung aufbauen können, oder die Haftung mit der Zeit, besonders unter anspruchsvollen Umweltbedingungen, verloren geht. Haftvermittlerzusammensetzungen, die vor dem Klebstoff auf das Substrat aufgebracht werden, um eine Zwischenschicht zwischen dem Substrat und dem Klebstoff zu bilden, werden aus diesem Grund seit langem verwendet, um die Haftung zu verbessern. Ein besonders wichtiges Einsatzgebiet von Haftvermittlerzusammensetzungen ist der Fahrzeugbau, insbesondere beim "Direct Glazing", dem Verkleben von Scheiben mit Fahrzeugkarosserien.

Typischerweise basieren derartige Zusammensetzungen auf Organosilanen, die eine ideale Zwischenschicht für Verklebungen von Gläsern und anderen Materialien ermöglichen. Insbesondere werden derartige Haftvermittlerzusammensetzungen als Primer und Aktivatoren, d.h. als Haftverbesserungsvoranstrich, verwendet. Derartige Zusammensetzungen enthalten häufig inerte, leicht flüchtige Lösungsmittel, um ein schnelles Ablüften zu gewährleisten. Der Gehalt an organischem Lösungsmittel ist aber hinsichtlich der Umweltverträglichkeit und Arbeitssicherheit nachteilig.

Wässrige Haftvermittlerzusammensetzungen auf Basis von Organosilanen, die Wasser als Lösungsmittel enthalten, sind bekannt. Sie weisen jedoch einige Nachteile auf. Ein Problem bei wässrigen Haftvermittlerzusammensetzungen auf Silanbasis ist entweder deren relativ geringe Lagerstabilität bei genügender Reaktivität oder deren ungenügende Reaktivität bei genügender Stabilität. Die eingesetzten Silane weisen nämlich hydrolysierbare funktionelle Gruppen auf, die bei Mischung mit Wasser unter Bildung von Silanolgruppen (Si-OH) hydrolysieren. Solche Silanolgruppen sind häufig reaktiv und kondensieren spontan miteinander und Bildung höhermolekularer Kondensationsprodukte, was zu unlöslichen Ausfällungen in den Haftvermittlerzusammensetzungen und Funktionsbeeinträchtigung führt.

Weiterhin ist der Einsatz von Aminosilanen und/oder Mercaptosilanen in solchen wässrigen Haftvermittlerzusammensetzungen bekannt. Das Emulgieren von Mercaptosilanen oder Aminosilan-Mercaptosilan-Gemischen in Wasser ist besonders schwierig, da die Mercaptosilane nicht wasserlöslich sind, bevor die Silangruppen hydrolysiert werden. Um diese Silane in Wasser zu bringen, muss vor der Hydrolyse eine vollständige, homogene Verteilung sichergestellt werden. Zusätzlich muss der pH mit Säuren, z.B. Essigsäure, so justiert werden, dass die als Folgereaktion auftretende Kondensation möglichst verlangsamt wird. Daher müssen die Silane und das Wasser schnell homogen vermischt werden, was spezielle Mischvorrichtungen erfordert.

Dies führt dazu, dass wässrige Haftvermittlerzusammensetzungen generell als 2-Komponentensysteme (z.B. Sika HydroPrep^{®}-100 von Sika Schweiz AG) vertrieben werden und vor dem Gebrauch vor Ort ein Mischprozess für die Mischung der beiden Komponenten erforderlich ist. Es ist wichtig, dass die beiden Komponenten unter sehr starken Turbulenzen sehr schnell homogen gemischt werden. Hierfür ist ein speziell dafür entwickeltes Gerät ("Shaker") erforderlich. Nach der Zubereitung hat das fertig gemischte Produkt eine Lagerstabilität ("Pot-Life") von nicht mehr als 30 Tagen.

Dieses Problem konnte jedoch durch spezielle Formulierungen, wie sie in der EP2951244 gelehrt werden, behoben werden. Die dort offenbarten wässrigen Haftvermittlerzusammensetzungen weisen auch als einkomponentige Formulierungen eine sehr gute Lagerstabilität auf.

Trotz dieser Weiterentwicklungen weisen wässrige Haftvermittlerzusammensetzungen auf Basis von Organosilanen jedoch noch immer Nachteile auf, die ihren Einsatz für anspruchsvolle Verklebungen einschränken. Insbesondere weisen Verklebungen, die auf solchen Haftvermittlern beruhen, meist eine schlechtere Hitzestabilität verglichen mit Haftvermittlern, die auf organischen Lösungsmitteln basieren. In Kombination mit spezifischen Klebstoffen kann dies zu Problemen führen, wenn die Verklebung über längere Zeit einem heissen Klima ausgesetzt wird, da sie unter solchen Umständen bei einigen Substraten, insbesondere Glas, nach einiger Zeit an Stabilität verlieren kann.

Das Dokument WO 2008/061556 betrifft eine Haftvermittlerzusammensetzung enthaltend ein Epoxysilan und ein Mercaptosilan. Das Dokument WO 2008/041976 offenbart eine wässrige Haftvermittlerszusammensetzung, die einen pH von 6 aufweist und Silane enthält. Die Silane sind jedoch Aminosilane. Das Dokument EP 1 894 966 offenbart wässrige Haftvermittlerszusammensetzungen, die ein Silan enthalten, aber kein Epoxysilan. Das Dokument EP 2 762 535 hat eine ähnliche Offenbarung.

### Darstellung der Erfindung

Die Aufgabe der vorliegenden Erfindung ist es daher, wässrige Haftvermittlerzusammensetzungen auf Silanbasis bereitzustellen, die eine ausgezeichnete Lagerstabilität aufweisen, so dass die wässrigen Zusammensetzungen auch als einkomponentige wässrige Haftvermittlersysteme vertrieben werden können, wobei auch eine einfachere Mischung ohne spezielle Mischvorrichtungen möglich sein soll, und die darüber hinaus eine deutlich verbesserte Hitzestabilität der Verklebung bewirken.

Überraschenderweise wurde nun gefunden, dass durch die Zugabe mindestens eines Mercaptosilans und Einstellung des pH der resultierenden Mischung in den sauren Bereich zu einer wässrigen Zusammensetzung enthaltend ein Epoxysilan eine lagerstabile, einkomponentige Zusammensetzung hergestellt werden kann, welche Verklebungen mit hoher Hitzestabilität ermöglicht. Die Massnahmen führen in unerwarteter Weise zum technischen Ergebnis und somit kann die wässrige Zusammensetzung in einer Vielzahl von Anwendungen, selbst bei Vorliegen von basenempfindlichen Substraten und/oder Klebstoffen, eingesetzt werden.

Dementsprechend betrifft die Erfindung eine wässrige Zusammensetzung, umfassend
a) mindestens ein Epoxysilan, das mindestens eine Epoxygruppe und mindestens eine an Si gebundene hydrolysierbare Gruppe aufweist,
b) mindestens ein nichtionisches Netzmittel,
   und
c1) 0.2 bis 2 Gew.-%, bezogen auf das Gesamtgewicht der wässrigen Zusammensetzung, mindestens eines Mercaptosilans, das mindestens eine Mercaptogruppe und mindestens eine an Si gebundene hydrolysierbare Gruppe aufweist, sowie so viel einer wasserlöslichen Säure, dass der pH der resultierenden Zusammensetzung zwischen 1 und 6 liegt, mit der Massgabe, dass das Epoxysilan in einer Menge von 0.2 bis 1 Gew.-%, bezogen auf das Gesamtgewicht der wässrigen Zusammensetzung, vorliegt.

Es hat sich überraschenderweise gezeigt, dass sich mit den erfindungsgemässen Zusammensetzungen und unter Einsatz eines Klebstoffs äusserst hitzestabile Verklebungen herstellen lassen. Die gebildeten Verklebungen können mehrere Wochen, beispielsweise 5 Wochen, bei 90°C ohne Einbussen der Verklebung gelagert werden. Zusätzlich zeigt sich erstaunlicherweise eine verbesserte Mischbarkeit der reaktiven Komponenten in Wasser, was den Mischprozess deutlich vereinfacht und eine problemlose Herstellung in einem Standardreaktor möglich macht. Die Erfindung ermöglicht somit eine einfachere Handhabung, da das Produkt als 1-Komponentensytem und nicht mehr als kompliziertes 2-Komponentensystem angeboten werden kann. Die Erfindung befriedigt somit das Bedürfnis, ein wässriges 1-Komponentensystem anbieten zu können.

Die erfindungsgemässe wässrige Zusammensetzung eignet sich ganz allgemein als reaktive, nicht sichtbare Haft-Vorbehandlung für Substrate, insbesondere Glas und Glaskeramiken, bzw. für das "Direct Glazing" im Automobilbau als Vorbehandlung für die Verklebung, insbesondere mit Polyurethan-Klebstoffen, vorzugsweise 1K Polyurethan-Klebstoffen.

### Weg zur Ausführung der Erfindung

Im vorliegenden Dokument bezeichnen die Terme "Silan" bzw. "Organosilan" Verbindungen, welche einerseits mindestens eine, üblicherweise zwei oder drei, hydrolysierbare Gruppen aufweisen, vorzugsweise über Si-O-Bindungen, direkt an das Siliciumatom gebundene Alkoxygruppen oder Acyloxygruppen, und andererseits mindestens einen, über eine Si-C-Bindung, direkt an das Siliciumatom gebundenen organischen Rest aufweisen. Derartige Silane mit Alkoxy- oder Acyloxygruppen sind dem Fachmann auch als Organoalkoxysilane bzw. Organoacyloxysilane bekannt.

Die Silane haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).

Als "Epoxysilane", "Aminosilane" bzw. "Mercaptosilane" werden Organosilane bezeichnet, deren organischer Rest eine Epoxygruppe, Aminogruppe bzw. eine Mercaptogruppe aufweist. Amino-, Mercapto- oder Oxiran-Gruppen aufweisenden Organo-Siliziumverbindungen werden auch als "Aminosilane", "Mercaptosilane" oder "Epoxysilane" bezeichnet.

Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Eine an Si gebundene hydrolysierbare Gruppe ist eine Gruppe, die durch Hydrolyse, gegebenenfalls unter Anwesenheit eines Katalysators zu einer Silanolgruppe hydrolysiert werden kann. Hydrolyseprodukte sind Silane, deren hydrolysierbaren Gruppen zumindest teilweise hydrolysiert sind, d.h. zumindest ein Teil der hydrolysierbaren Gruppen ist durch eine OH-Gruppe ersetzt. Kondensationsprodukte beinhalten Kondensate aus zwei oder mehr solcher hydrolysierten Silane. Diese Hydrolyse- und Kondensationsprodukte von Silanen sind dem Fachmann bekannt.

Der Ausdruck "unabhängig voneinander" bedeutet hier immer auch unabhängig voneinander in demselben Molekül, wenn verschiedene Möglichkeiten bestehen.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Die Begriffe "Masse" und "Gewicht" werden in diesem Dokument synonym verwendet. So bezeichnet ein "Gewichtsprozent" (Gew.-%) einen prozentualen Massenanteil, der sich, falls nichts anderes erwähnt wird, auf die Masse (das Gewicht) der gesamten Zusammensetzung, bzw. je nach Zusammenhang des gesamten Moleküls, bezieht.

Als "Raumtemperatur" wird eine Temperatur von 23 ± 2°C, insbesondere 23°C, bezeichnet.

Alle in diesem Dokument erwähnten Industriestandards und Normen beziehen sich, sofern nichts anderes angegeben, auf die zum Zeitpunkt der Einreichung der Erstanmeldung gültige Fassung.

Die erfindungsgemässe Zusammensetzung enthält ein oder mehrere Organosilane, davon mindestens ein Epoxysilan. Organosilane in der erfindungsgemässen Zusammensetzung weisen jeweils mindestens eine an Si gebundene hydrolysierbare Gruppe auf. Es kann sich um jede übliche hydrolysierbare Gruppen handeln, wobei Alkoxygruppen und Acyloxygruppen bevorzugt sind, und C₁-C₄-Alkoxygruppen besonders bevorzugt sind. Nach der Mischung mit Wasser kann mit der Zeit eine Hydrolyse der hydrolysierbaren Gruppen erfolgen. Es ergeben sich dann Hydrolyseprodukte, bei denen zumindest ein Teil der hydrolysierbaren Gruppen durch OH Gruppen ersetzt werden. Als Folgereaktion können sich Kondensationsprodukte über die gebildeten Silanolgruppen in den Hydrolyseprodukten bilden. So können die enthaltenen Organosilane auch vollständig hydrolysiert oder teilhydrolysiert oder sogar teilkondensiert vorliegen.

Das in der erfindungsgemässen Zusammenseztung enthaltene Epoxysilan weist mindestens eine Epoxygruppe und mindestens eine an Si gebundene hydrolysierbare Gruppe auf. Die Epoxygruppe ist bevorzugt eine Glycidoxy- oder eine Epoxycyclohexylgruppe, insbesondere eine Glycidoxygruppe.

Bevorzugte Epoxysilane sind (Epoxyalkoxy)alkyltrialkoxysilane und 3-Glycidoxypropyltrialkoxysilane. Besonders bevorzugt ist gamma-Glycidoxypropyltrimethoxysilan. Bevorzugte Vertreter dieser Substanzklassen sind beta-(3,4-Epoxycyclohexyl)ethyltrimethoxysilan und beta-(3,4-Epoxycyclohexyl)ethyltriethoxysilan sowie 3-Glycidoxypropyltrmethoxysilan und/oder 3-Glycidoxypropyltriethoxysilan. Besonders bevorzugt sind 3-Glycidoxypropyltrmethoxysilan und/oder 3-Glycidoxypropyltriethoxysilan in der erfindungsgemässen Zusammensetzung enthalten.

Für die Zusammensetzung können ein oder mehrere Epoxysilane enthalten sein.

Die erfindungsgemässe Zusammensetzung umfasst ferner mindestens ein nichtionisches Netzmittel. Unter einem "nichtionischen Netzmittel" werden alle in Wasser nicht vorwiegend in ionischer Form vorliegende Substanzen verstanden, welche in der Lage sind, die Oberflächenspannung von Wasser herabzusetzen und/oder welche die Stabilisierung von Emulsionen ermöglichen. Dazu gehören nichtionische Tenside, oberflächenaktive Substanzen, Emulgatoren und ähnliche diese Eigenschaften aufweisende Substanzen.

Zu den geeigneten nichtionischen Tensiden, den sogenannten Niotensiden, gehören z.B. Ethoxylate, wie zum Beispiel ethoxylierte Additionsprodukte von Alkoholen, wie beispielsweise Polyether, Glykolether, Polyoxyalkylenpolyole, Amine, Fettsäuren, Fettsäureamide, Alkylphenole, Ethanolamide, Fettamine, Polysiloxane, Polyethersiloxane oder Fettsäureester, aber auch Alkyl- oder Alkylphenylpolyglykolether, wie z.B. Fettalkoholpolyglykolether, oder Fettsäureamide, Alkylglykoside, Zuckerester, Sorbitanester, Polysorbate oder Trialkylaminoxide, aber auch Ester und Amide aus Poly(meth)acrylsäuren mit Polyalkylenglykolen oder Aminopolyalkylenglykole, die allenfalls einseitig mit Alkylgruppen abgeschlossen sein können.

Derartige Tenside sind kommerziell breit erhältlich. Besonders geeignet sind alkoxylierte Alkohole, alkoxylierte nichtionische Fluorotenside, insbesondere Zonyl^{®} FSO-100, welches von ABCR, Deutschland kommerziell erhältlich ist, alkoxylierte Alkohole oder alkoxylierte Alkylphenole, insbesondere Antarox FM 33, welches kommerziell bei Rhodia kommerziell erhältlich ist. Weiterhin sind alkoxylierte Fettalkohole, wie Hydropalat^{®} 120 von Cognis, bevorzugt. Besonders bevorzugt wird Hydropalat^{®} 3037 von Cognis als nichtionisches Netzmittel eingesetzt. Weiterhin sehr bevorzugt sind Polyether, insbesondere kurzkettige Polyether mit Molmassen bis zu 300 g/mol, insbesondere mit bis zu 205 g/mol, bevorzugt bis zu 200 g/mol, wie beispielsweise Glycolether. Bevorzugte Polyether sind Polypropylenglykole, Polyethylenglykole sowie Triethylglykoldimethylether ("Triglyme"), Bis(2-methoxyethyl)ether ("Diglyme") und, ganz besonders bevorzugt, 2,5,7,10-Tetraoxaundecan.

Zu den geeigneten Emulgatoren gehören insbesondere auch solche ausgewählt aus Pyrrolidonen, Propionamiden und Aminoalkohol-Reaktionsprodukten. Pyrrolidone sind cyclische Carbonsäureamide, Propionamide sind lineare Carbonsäureamide. Aminoalkohole werden als integrierter Emulgator in Form eines Reaktionsproduktes mit mindestens einem Teil des Aminosilans und/oder Mercaptosilans in der Zusammensetzung eingesetzt. Bevorzugt ist der Einsatz von Pyrrolidonen oder Aminoalkohol-Reaktionsprodukten. Die Emulgatoren bewirken eine bessere Mischbarkeit mit Wasser und verlangsamte Kondensationsreaktionen nach Zugabe von Wasser.

Bei den einsetzbaren Pyrrolidonen handelt es sich insbesondere um 2-Pyrrolidone. 2-Pyrrolidone sind cyclische Carbonsäureamide. Das einsetzbare Pyrrolidon kann 2-Pyrrolidon, auch als γ-Butyrolactam bezeichnet, oder ein Derivat des 2-Pyrrolidons sein, das an mindestens einer der drei Methylenringgruppen und/oder am Stickstoffatom einen Substituenten aufweist. Geeignete Substituenten am Stickstoffatom sind Alkyl, z.B. C₁₋₁₂-Alkyl, bevorzugt C₁-C₇-Alkyl, besonders bevorzugt C₁-C₄-Alkyl, insbesondere Methyl oder Ethyl, oder Cycloalkyl, bevorzugt Cyclopentyl und Cyclohexyl, insbesondere Cyclohexyl. Geeignete Substituenten an der Methylengruppe sind z.B. Alkyl, bevorzugt C₁-C₄-Alkyl, insbesondere Methyl oder Ethyl.

Bevorzugt sind N-substituierte 2-Pyrrolidone. Gegebenenfalls können sie an mindestens einer Methylenringgruppe einen Substituenten aufweisen, was aber nicht bevorzugt ist. Beispiele sind N-C₁-C₁₂-Alkyl-2-pyrrolidon und Polyvinylpyrrolidon. Beispiele für Verbindungen mit längerkettigen Alkylgruppen sind 1-Octyl-2-pyrrolidon und 1-Dodecylpyrrolidon. Besonders bevorzugt sind N-C₁-C₇-Alkyl-2-pyrrolidon oder N-C₁-C₆-Alkyl-2-pyrrolidon, insbesondere N-C₁-C₄-Alkyl-2-pyrrolidon, und N-Cycloalkyl-2-pyrrolidon, wie N-Cyclohexyl-2-pyrrolidon. Am meisten bevorzugt sind N-Methyl-2-pyrrolidon (NMP), N-Ethyl-2-pyrrolidon (NEP) und insbesondere N-Cyclohexyl-2-pyrrolidon (CHP).

Als Propionamide eignen sich Propionamid selbst und Derivate des Propionamids. Beispiele für geeignete Propionamide sind Propionamide der Formel

R⁶-C(O)NR⁷₂

worin R⁶ eine substituierte oder unsubstituierte Ethylgruppe ist und R⁷ unabhängig voneinander H oder eine C₁₋₄-Alkylgruppe, insbesondere Methyl oder Ethyl, ist. Bevorzugt ist mindestens eine Gruppe R⁷ eine C₁₋₄-Alkylgruppe und besonders bevorzugt sind beide Gruppen R⁷ eine C₁₋₄-Alkylgruppe, wobei Methyl- und Ethylgruppe bevorzugt sind.

Die Gruppe R⁶ kann bevorzugt mindestens einen Substituenten und vorzugsweise genau einen Substituenten an der Ethylgruppe aufweisen. Der Substituent befindet sich bevorzugt am terminalen Ende der Ethylgruppe, d.h. am C3-Atom des Propionamids. Beispiele für geeignete Substituenten sind C₁-C₄-Alkoxygruppen, wie Methoxy, Ethoxy, Propoxy und Butoxy.

Konkrete Beispiele sind 3-Methoxy-N,N-dimethylpropionamid und 3-Butoxy-N, N-dimethylpropionam id.

Der Aminoalkohol, mit dem das Aminoalkohol-Reaktionsprodukt gebildet wird, ist eine Verbindung, die mindestens eine Aminogruppe und mindestens eine Hydroxygruppe aufweist. Der Aminoalkohol kann z.B. eine oder zwei Hydroxygruppen aufweisen, wobei eine Hydroxygruppe bevorzugt ist. Der Aminoalkohol kann z.B. eine oder zwei oder mehr Aminogruppen aufweisen, wobei es sich bei den Aminogruppen z.B. um primäre oder sekundäre Aminogruppen handeln kann.

Beispiele für Aminoalkohole, die als Emulgatorvorstufe zur Bildung des Aminoalkohol-Reaktionsprodukts geeignet sind, sind Ethanolamin, Diethylenglykolamin, N-(β-Aminoethyl)aminoethanol, Diethanolamin und N-Methyldiethanolamin, wobei Diethylenglykolamin am meisten bevorzugt ist. Diethylenglykolamin wird auch als 2-(2-Aminoethoxy)ethanol bezeichnet.

Wenn mindestens ein Aminoalkohol-Reaktionsprodukt als Emulgator eingesetzt wird, sind der Aminoalkohol und zumindest ein Teil des Epoxysilans und der allenfalls enthaltenen weiteren Organosilane in Form eines Reaktionsprodukts enthalten, bei dem zumindest ein Teil der hydrolysierbaren Gruppen, die in dem mindestens einen Epoxysilan und allenfalls enthaltenen weiteren Organosilanen durch die Aminoalkoholat-Gruppe des Aminoalkohols ersetzt ist.

Das Reaktionsprodukt wird durch eine Umesterung oder Veresterung mindestens eines Teils der an Si gebundenen hydrolysierbaren Gruppen der in der Zusammensetzung enthaltenen Silane mit dem Aminoalkohol erhalten.

Der Um- oder Veresterungsgrad kann in einem weiten Bereich gewählt werden. Es können auch alle der an Si gebundenen hydrolysierbaren Gruppen der in der Zusammensetzung enthaltenen Epoxysilane un dallenfalls enthaltenen weiteren Organosilane durch die Aminoalkoholatgruppe ersetzt sein. Vorzugsweise wird der Um- oder Veresterungsgrad so gewählt, dass, bezogen auf die Gesamtmenge der in der Zusammensetzung enthaltenen Silane, das molare Verhältnis der an Si gebundenen hydrolysierbaren Gruppen und der an Si gebundenen Aminoalkoholat-Gruppen, die in den Silanen vorhanden sind, zu den an Si gebundenen Aminoalkoholat-Gruppen im Bereich von 1:1 bis 10:1, bevorzugt von 10:5 bis 10:2 liegt.

Wenn z.B. bei einem Silan mit drei hydrolysierbaren Gruppen (z.B. Methoxy), eine hydrolysierbare Gruppe durch eine Aminoalkoholat-Gruppe ersetzt wird, enthält das Reaktionsprodukt zwei hydrolysierbare Gruppen und eine Aminoalkoholat-Gruppe. Das molare Verhältnis der an Si gebundenen hydrolysierbaren Gruppen (2) und der an Si gebundenen Aminoalkoholat-Gruppen (1), zu den an Si gebundenen Aminoalkoholat-Gruppen (1) wäre dann 3:1. Zwar ist die Aminoalkoholat-Gruppe prinzipiell auch eine hydrolysierbare Gruppe, dies wird aber hier nicht berücksichtigt.

Es versteht sich, dass sich dieses molare Verhältnis auf die Zusammensetzung bezieht, bevor es zu Hydrolyse- und/oder Kondensationsreaktionen gekommen ist. Es versteht sich ferner, dass eine Zusammensetzung enthaltend das beschriebene Reaktionsprodukt ein Gemisch unterschiedlicher Verbindungen sein kann, z.B. nicht umgesetzte Epoxysilane und allenfalls enthaltenen weiteren Orgaosilane, die ein, zwei oder drei Aminoalkoholatgruppen aufweisen. Die vorstehend angegebenen molaren Verhältnisse sind daher als Mittelwerte zu verstehen. Nach Zugabe von Wasser können sich dann zusätzlich Hydrolyse- und/oder Kondensationsprodukte bilden.

Epoxysilane und allenfalls enthaltene weitere Silane, die durch die Umesterung oder Veresterung Aminoalkoholat-Gruppen aufweisen werden hier weiterhin als Epoxysilane bzw. allenfalls weiter enthaltene Organosilane aufgefasst. Das Verfahren zur Herstellung der Mischungen bzw. der Reaktionsprodukte wird weiter unten näher erläutert.

In einer bevorzugten Ausführungsform wird zu der das Aminoalkohol-Reaktionsprodukt enthaltenden Zusammensetzung zusätzlich ein weiterer Emulgator ausgewählt aus Pyrrolidonen und Propionamiden, bevorzugt Pyrrolidonen, insbesondere N-Cyclohexyl-2-pyrrolidon, zugesetzt. Auf diese Weise können Mischbarkeit der Zusammensetzung und Lagerstabilität der erhaltenen wässrigen Zusammensetzung weiter erhöht werden.

In bevorzugten Ausführungsformen ist das mindestens eine enthaltene nichtionische Netzmittel ausgewählt aus Emulgatoren oder Tensiden der Gruppe Polyether, Polyethersiloxane, Pyrrolidone und modifizierte natürliche Öle.

In einer Hauptausführungsform enthält die erfindungsgemässe Zusammensetzung zusätzlich 0.2 bis 2 Gew.-%, bevorzugt 0.25 bis 1 Gew.-%, bezogen auf das Gesamtgewicht der wässrigen Zusammensetzung, mindestens eines Mercaptosilans, das mindestens eine Mercaptogruppe und mindestens eine an Si gebundene hydrolysierbare Gruppe aufweist, sowie so viel einer wasserlöslichen Säure, dass der pH der resultierenden Zusammensetzung zwischen 1 und 6, bevorzugt zwischen 2.5 und 5 liegt, mit der Massgabe, dass das Epoxysilan in einer Menge von 0.2 bis 1 Gew.-%, bevorzugt 0.3 bis 0.8 Gew.-%, bezogen auf das Gesamtgewicht der wässrigen Zusammensetzung, vorliegt.

Diese Ausführungsform führt zu besonders hitzebeständigen Verklebungen die auch unter Raumtemperatur ausgezeichnete Klebeeigenschaften zeigen und ist insbesondere für basenempfindliche, bzw. säurestabile Untergründe und/oder Klebstoffe geeignet.

In dieser Ausführungsform wird bevorzugt ein Polyether als nichtionisches Netzmittel verwendet, besonders bevorzugt 2,5,7,10,-Tetraoxaundecan. Weiterhin besonders bevorzugt in dieser Ausführungsform als nichtionisches Netzmittel sind Pyrrolidone, insbesondere N-Cyclohexyl-2-pyrrolidon und/oder Polyether-modifiziertes Siloxan, insbesondere BYK-349 von BYK Chemie GmbH, Deutschland und/oder modifiziertes natürliches Öl, insbesondere Hydropalat^{®} 3037 von Cognis, Deutschland. Die bevorzugten Mengen dieser nionchtionischen Netzmittel in dieser Ausführungsform sind 0.1-2.0 Gew.-%, bezogen auf die gesamte Zusammensetzung, für Pyrrolidone und/oder Polyether, 0.1-0.5 Gew.-%, bezogen auf die gesamte Zusammensetzung, für Polyether-modifiziertes Siloxan und 0.25-0.75 Gew.-%, bezogen auf die gesamte Zusammensetzung, für modifiziertes natürliches Öl.

Das in dieser Ausführungsform enthaltene Mercaptosilan, das mindestens eine an Si gebundene hydrolysierbare Gruppe aufweist, ist vorzugsweise ein mercaptofunktionelles Organoalkoxysilane, d.h. Mercaptosilan, welches an der hydrolysierbaren Silangruppe eine C1 bis C4 Alkoxygruppe trägt. Besonders bevorzugt sind mercaptofunktionelle Organomethoxysilane und mercaptofunktionelle Organoethoxysilane. Als besonders vorteilhaft haben sich Mercaptosilane mit drei Alkoxygruppen, insbesondere drei Methoxygruppen, erwiesen.

Besonders bevorzugte Mercaptosilane sind 3-Mercaptopropyltrimethoxysilan und 3-Mercaptopropyltriethoxysilan und 3-Mercaptopropylmethyldimethoxysilan, insbesondere 3-Mercaptopropyltrimethoxysilan und 3-Mercaptopropyltriethoxysilan, besonders bevorzugt 3-Mercaptopropyltrimethoxysilan.

Es können jedoch auch Mercaptosilane mit mehreren Mercapto- und/oder mehreren Silangruppen verwendet werden.

Das mindestens eine Mercaptosilan ist in dieser Ausführungsform mit einer Menge von 0.2 bis 2 Gew.-%, bevorzugt 0.25 bis 1 Gew.-%, insbesondere bevorzugt mit einer Menge von 0.3-0.75 Gew.-%, bezogen auf die gesamte Zusammensetzung, in der erfindungsgemässen Zusammensetzung enthalten.

Weiterhin enthält diese Ausführungsform der Erfindung mindestens eine wasserlösliche Säure. Diese Säure ist in dieser Ausführungsform in einer solchen Menge enthalten, dass der pH der resultierenden Zusammensetzung zwischen 3 und 6, bevorzugt zwischen 2.5 und 5 liegt. Ohne Verwendung einer Säure ist es nicht möglich, in dieser Ausführungsform der Erfindung eine stabile Zusammensetzung zu erhalten, die über eine akzeptable Lagerstabilität verfügt ohne Trübungen und Ausfällungen zu zeigen. Die Säure kann organisch oder anorganisch sein. Organische Säuren sind einerseits Carbonsäuren, insbesondere eine Carbonsäure, welche ausgewählt ist aus der Gruppe umfassend Ameisen-, Essig-, Propion-, Trifluoressig-, Oxal-, Malon-, Bernstein-, Malein-, Fumar- und Zitronensäure sowie Aminosäuren, insbesondere Asparginsäure und Glutaminsäure. Als Carbonsäure ist Essigsäure bevorzugt.

Organische Säuren sind anderseits insbesondere solche die einen Schwefelatom oder ein Phosphoratom enthalten. Derartige organische Säuren sind insbesondere organische Sulfonsäuren. Unter organischer Sulfonsäure werden Verbindungen verstanden, welche einen Kohlenstoff-Atome aufweisenden organischen Rest sowie mindestens eine funktionelle Gruppe -SO₃H aufweisen. Bevorzugt sind aromatische Sulfonsäuren.

Die aromatische Sulfonsäure kann ein- oder mehrkernig sein und es können eine oder mehrere Sulfonsäure-Gruppen vorhanden sein. Beispielsweise können dies 1- oder 2-Napthalinsulfonsäure, 1,5-Napthalindisulfonsäure, Benzolsulfonsäure oder Alkylbenzolsulfonsäuren sein.

Die Säure kann weiterhin eine anorganische Säure sein. Als anorganische Säuren eignen sich z.B. jene, die ein Schwefelatom oder ein Phosphoratom aufweisen. Als Phosphoratome aufweisende Säuren gelten insbesondere Phosphorsäure, Phosporige Säure, Phosponsäure, Phosphonige Säure. Als Schwefelatome aufweisende Säuren gelten insbesondere Schwefelsäuren, insbesondere Schwefelsäure, schweflige Säuren, Perschwefelsäure, Dischwefelsäure (=Pyroschwefelsäure), Dischwefelige Säure, Dithionsäure, Dithionige Säure, Thioschwefelsäure oder Thioschweflige Säure.

Bevorzugt sind Säuren die einen pKₐ zwischen 4,0 und 5 aufweisen. Unter pKₐ versteht der Chemiker bekannterweise den negativen dekadischen Logarithmus der Säuredissoziationskonstante Kₐ: pKₐ = -log₁₀Kₐ.

Typische Mengen der Säure für die Einstellung des pH auf den gewünschten Bereich hängen selbstverständlich von der verwendeten Säure und ihrer Stärke ab. Für Carbonsäuren, insbesondere Essigsäure, liegt eine geeignete Menge typsicherweise zwischen 0.15 und 2.5 Gew.-%, bezogen auf die gesamte Zusammensetzung.

Alle Ausführungsformen der erfindungsgemässen Zusammensetzung enthalten optional, aber bevorzugt, weitere Organosilane. Inbesondere enthält die erfindungsgemässe Zusammensetzung weitere Organosilane oder Oligomere dieser Organosilane, die mindestens eine an Si gebundene hydrolysierbare Gruppe aufweisen und mindestens eine weitere funktionelle Gruppe ausgewählt aus primären Aminogruppen, sekundären Aminogruppen, Hydroxylgruppen und Isocyanuratgruppen aufweisen.

Als weitere Organosilane sind besonders geeignet Organo-Siliziumverbindungen der Formeln (I) oder (II) oder (III) 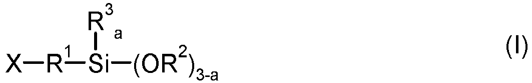 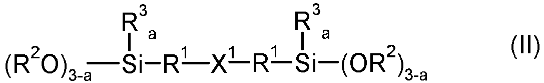 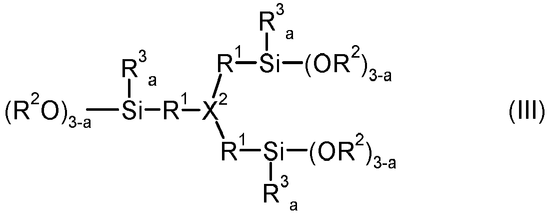
R¹ steht hierbei für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen.
R² steht hierbei für H oder für eine Alkylgruppe mit 1 bis 5 C-Atomen, insbesondere für Methyl oder Ethyl, oder eine Acylgruppe, insbesondere für Acetyl.
R³ steht hierbei für eine Alkylgruppe mit 1 bis 8 C-Atomen, insbesondere Methyl.
X steht hierbei für H, oder für eine funktionelle Gruppe, welche ausgewählt ist aus der Gruppe umfassend OH, (Meth)acryloxy, Amin, Acylthio und Vinyl, bevorzugt Amin, steht. Der Vollständigkeit halber wird erwähnt, dass unter Acylthio in diesem Dokument der Substituent 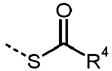 verstanden wird, wobei R⁴ für Alkyl, insbesondere mit 1 bis 20 Kohlenstoffatomen, steht und die gestrichelte Linie die Bindung zum Substituent R¹ darstellt.
X¹ steht hierbei für eine funktionelle Gruppe, welche ausgewählt ist aus der Gruppe umfassend NH, S, S₂ und S₄.
X² steht hierbei für eine funktionelle Gruppe, welche ausgewählt ist aus der Gruppe umfassend N und Isocyanurat.
a steht hierbei für einen der Werte 0, 1 oder 2, bevorzugt 0.

Der Substituent R¹ bedeutet insbesondere eine Methylen-, Propylen-, Methylpropylen-, Butylen- oder Dimethylbutylengruppe. Als besonders bevorzugt wird Propylengruppe als Substituent R¹.

Als Organo-Siliziumverbindungen der Formel (I) sind beispielsweise geeignet die Organo-Siliziumverbindungen ausgewählt aus der Gruppe umfassend Octyltrimethoxysilan, Dodecyltrimethoxysilan, Hexadecyltrimethoxysilan, Methyl-octyldimethoxysilan;
3-Methacryloxypropyltrialkoxysilane, 3-Methacryloxypropyltriethoxysilan, 3-Methacryloxypropyltrimethoxysilan;
3-Aminopropyltrimethoxysilan, 3-Aminopropyltriethoxysilan, 3-Aminopropyl-dimethoxymethylsilan, 3-Amino-2-methylpropyl-trimethoxysilan, N-(2-Aminoethyl)-3-aminopropyl-trimethoxysilan, N-(2-Aminoethyl)-3-aminopropyl-triethoxysilan, N-(2-Aminoethyl)-3-aminopropyl-dimethoxymethylsilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, [3-(2-Aminoethylamino)-propyl]trimethoxysilan (= 4,7,10-Triazadecyl-trimethoxysilan), 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, 7-Amino-4-oxaheptyldimethoxymethylsilan, N-(Methyl)-3-aminopropyltrimethoxysilan, N-(n-butyl)-3-aminopropyltrimethoxysilan;
3-Acylthiopropyltrimethoxysilan;
Vinyltrimethoxysilan und Vinyltriethoxysilan.

Auch bevorzugt sind die gerade genannten Organo-Siliziumverbindungen, deren Alkoxygruppen durch Acetoxygruppen ersetzt sind, wie zum Beispiel Octyltriacetoxysilan (Octyl-Si(O(O=C)CH₃)₃). Derartige Organo-Siliziumverbindungen spalten Essigsäure bei der Hydrolyse ab.

Bevorzugt sind bei diesen genannten Organo-Siliziumverbindungen diejenige, welche einen an das Siliziumatom gebundenen organischen Substituenten aufweisen, welcher zusätzlich noch eine funktionelle Gruppe aufweisen, das heisst, welcher keine Alkylgruppe ist, und einer Formel (I) entsprechen, in welcher X nicht H ist.

Als Organo-Siliziumverbindungen der Formel (II) sind geeignet beispielsweise die Organo-Siliziumverbindungen ausgewählt aus der Gruppe umfassend Bis-[3-(trimethoxysilyl)-propyl]-amin, Bis-[3-(triethoxysilyl)-propyl]-amin, 4,4,15,15-Tetraethoxy-3,16-dioxa-8,9,10,11-tetrathia-4-15-disilaoctadecan (Bis(triethoxysilylpropyl)polysulfid oder Bis(triethoxysilylpropyl)tetrasulfan), Bis(triethoxysilylpropyl)disulfid.

Als Organo-Siliziumverbindungen der Formel (III) sind geeignet beispielsweise die Organo-Siliziumverbindungen ausgewählt aus der Gruppe umfassend Tris-[3-(trimethoxysilyl)-propyl]-amin, Tris-[3-(triethoxysilyl)-propyl]-amin, 1,3,5-tris-[3-(trimethoxysilyl)propyl]-1,3,5-triazine-2,4,6(1H,3H,5H)-trion-harnstoff (=Tris-(3-(trimethoxysilyl)propyl)isocyanurat) und 1,3,5-tris[3-(triethoxysilyl)propyl]-1,3,5-triazine-2,4,6(1H,3H,5H)-trion-harnstoff (=Tris(3-(triethoxysilyl)propyl)isocyanurat).

Gegebenenfalls kann die Zusammensetzung ferner mindestens ein Tetraalkoxysilan der Formel (IV) enthalten

Si(OR⁴)₄ (IV)

wobei R⁴ unabhängig voneinander eine Alkylgruppe mit 1 bis 4 C-Atomen oder für eine Acylgruppe, insbesondere Acetylgruppe, steht. Derartige Tetraalkoxysilane sind beispielsweise Tetramethoxysilan, Tetraethoxysilan, Tetraisopropoxysilan, Tetrapropoxysilan, Tetrabutoxysilan und Tetraacetoxysilan. Besonders bevorzugt ist Tetraethoxysilan. Wie bei den Aminosilanen und Mercaptosilanen können die Tetraalkoxysilane bei Anwesenheit von Wasser hydrolysieren und gegebenenfalls mit anderen Silanen kondensieren.

Bevorzugt als weitere Organosilane sind Aminosilane, insbesondere Aminosilane mit X = NH₂ oder NH₂-CH₂-CH₂-NH, X¹ = NH und X² = N. Besonders bevorzugt sind 3-Aminopropyltrimethoxysilan, N-(2-Aminoethyl)-3-aminopropyl-trimethoxysilan, Bis[3-(trimethoxysilyl)-propyl]-amin, 3-Aminopropyltriethoxysilan, N-(2-Aminoethyl)-3-aminopropyl-triethoxysilan und Bis[3-(triethoxysilyl)-propyl]-amin sowie deren Mischungen untereinander.

Als Aminosilane sind insbesondere Aminosilane geeignet, welche ausgewählt sind aus der Gruppe bestehend aus 3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, N-Methyl-3-aminopropyl-trimethoxysilan, N-Ethyl-3-aminopropyl-trimethoxysilan, N-Butyl-3-aminopropyl-trimethoxysilan, N-Cyclohexyl-3-aminopropyl-trimethoxysilan, N-Phenyl-3-aminopropyl-trimethoxysilan, N-Methyl-3-amino-2-methylpropyl-trimethoxysilan, N-Ethyl-3-amino-2-methylpropyl-trimethoxysilan, N-Ethyl-3-aminopropyl-dimethoxy-methylsilan, N-Phenyl-4-aminobutyl-trimethoxysilan, N-Phenyl-aminomethyl-dimethoxymethylsilan, N-Cyclohexyl-aminomethyl-dimethoxymethylsilan, N-Methyl-aminomethyl-dimethoxymethylsilan, N-Ethylaminomethyl-dimethoxymethylsilan, N-Propyl-aminomethyl-dimethoxymethylsilan, N-Butyl-aminomethyl-dimethoxymethylsilan; N-(2-Aminoethyl)-3-aminopropyl-trimethoxysilan, 3-[2-(2-Aminoethylamino)-ethylamino]-propyl-trimethoxysilan, Bis(trimethoxysilylpropyl)amin, sowie deren Analoga mit drei Ethoxy- oder drei Isopropoxygruppen anstelle der drei Methoxygruppen am Silicium.

In einer Ausführungsform ist das Aminosilan der Formel (I) ein Aminosilan der Formel (V)

H₂N-R⁵-Si(OR²)₍₃₋ₐ₎(R³)ₐ (V)

wobei R⁵ für eine lineare oder verzweigte Alkylengruppe mit 1 bis 6 C-Atomen, insbesondere für Propylen, steht und die anderen Substituenten und Indices wie in Formel (I) definiert sind. Als besonders bevorzugt gilt hierbei 3-Aminopropyltrimethoxysilan.

In einer bevorzugten Ausführungsform weist das Aminosilan der Formel (I) sekundäre Aminogruppen auf, wobei es sich hierbei insbesondere um Aminosilane der Formel (VI) oder (VII) oder (VIII) handelt. 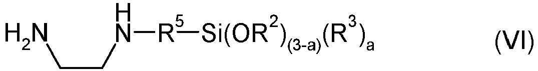 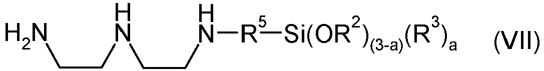 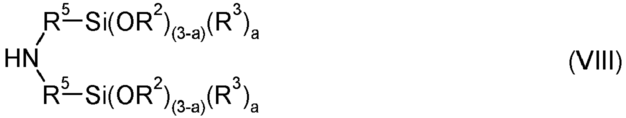 wobei R⁵ für eine lineare oder verzweigte Alkylengruppe mit 1 bis 6 C-Atomen, insbesondere für Propylen, steht und die anderen Substituenten und Indices wie in Formel (I) definiert sind. Als besonders bevorzugt gezeigt haben sich N-(2-Aminoethyl)-3-aminopropyl-trimethoxysilan, 3-[2-(2-Aminoethylamino)-ethylamino]-propyl-trimethoxysilan und Bis(trimethoxysilylpropyl)amin.

Es hat sich als besonders vorteilhaft herausgestellt, wenn zwei oder mehr Aminosilane der Formel (I) in der Zusammensetzung, vorhanden sind, von denen vorzugsweise mindestens eines ein Aminosilan der Formel (VI) ist. Eine besonders bevorzugte Kombination ist ein Aminosilan der Formel (VI) und ein ein Aminosilan der Formel (VIII) in der Zusammensetzung.

Alle erfindungsgemässen Zusammensetzungen sind wässrig, d.h. die Zusammensetzung umfasst ferner Wasser.

Die erfindungsgemässe Zusammensetzung ist insbesondere eine einkomponentige wässrige Zusammensetzung, die 90-98 Gew.-%, bezogen auf die gesamte Zusammensetzung, Wasser umfasst. Falls es eine mehrkomponentige Zusammensetzung ist, umfasst diese nach Vermischen aller Komponenten bevorzugt 90-98 Gew.-%, bezogen auf die gesamte Zusammensetzung, Wasser.

Eine besonders bevorzuge Hauptausführungsform der erfindungsgemässen Zusammensetzung umfasst Wasser, sowie:
0.3 bis 1 Gew.-% Glycidoxypropyltrimethoxysilan, bezogen auf das Gesamtgewicht der wässrigen Zusammensetzung,
0.1 bis 2 Gew.-% mindestens eines Netzmittels ausgewählt aus Polyethern, Polyethersiloxanen, Pyrrolidonen und modifizierten natürlichen Ölen,
0.3 bis 1 Gew.-% Mercaptopropyltrimethoxysilan, bezogen auf das Gesamtgewicht der wässrigen Zusammensetzung,
0 bis 0.3 Gew.-% mindestens eines Amino- oder Isocyanuratosilans, bezogen auf das Gesamtgewicht der wässrigen Zusammensetzung, sowie so viel einer wasserlöslichen Säure, dass der pH der resultierenden Zusammensetzung zwischen 2.5 und 5 liegt.

Die ein- oder mehrkomponentige Zusammensetzung kann weitere optionale Bestandteile umfassen. Derartige zusätzliche Bestandteile sind z.B. anionische, kationische oder amphoterische Tenside, Haftvermittleradditive, Katalysatoren, Cosolventien, Biozide, Antiabsetzmittel, Stabilisatoren, Inhibitoren, Pigmente, Farbstoffe, Korrosionsschutzmittel, Geruchsstoffe, UV-Indikatoren, Thixotropiermittel, Füllstoffe, Entschäumer und weitere, dem Fachmann auf dem Gebiet der wässrigen Haftvermittlerzusammensetzungen bekannten Additive.

Beispielsweise sind ionische oder amphoterische Tenside mögliche zusätzliche Bestandteile der ein- oder zweikomponentigen wässrigen Haftvermittlerzusammensetzung. Als solche Tenside können natürliche oder synthetische Stoffe verwendet werden, welche in Lösungen die Oberflächenspannung des Wassers oder anderer Flüssigkeiten herabsetzen. Als Tenside, auch Netzmittel genannt, können anionische, kationische, oder ampholytische Tenside oder deren Mischungen verwendet werden.

Beispiele für anionische Tenside sind Carboxylat-, Sulfat-, Phosphat- oder Sulfonat-Gruppen aufweisende Tenside, wie zum Beispiel Aminosäurederivate, Fettalkoholethersulfate, Fettalkoholsulfate, Seifen, Alkylphenolethoxylate, Fettalkoholethoxylate, aber auch Alkansulfonate, Olefinsulfonate oder Alkylphosphate.

Beispiele für kationische Tenside sind quaternäre Ammonium- oder Phosphoniumverbindungen, wie zum Beispiel Tetraalkylammoniumsalze, N-,N-Dialkyl-imidazolinverbindungen, Dimethyldistearyl-ammoniumverbindungen, oder N-Alkylpyridinverbindungen, insbesondere Ammoniumchloride. Zu den amphoytischen oder amphoterischen Tensiden gehören amphotere Elektrolyte, sogeannte Ampholyte, wie zum Beispiel Aminocarbonsäuren, und Betaine.

Ein weiterer bevorzugt eingesetzter optionaler Bestandteil ist ein wasserlösliches Haftvermittleradditiv, vorzugsweise ein wasserlösliches Amin-haltiges Haftvermittleradditiv. Durch den Einsatz von wasserlöslichen Haftvermittleradditiven wird die Haftperformance generell verbessert. Wasserlösliche Haftvermittleradditive sind im Handel erhältlich.

Beispiele für geeignete wasserlösliche Haftvermittleradditive sind reaktive organofunktionelle Siloxan-Oligomere. Beispiele sind kondensierte Aminosiloxane und/oder Phenylsiloxane. Der Kondensationsgrad der Siloxane kann unterschiedlich sein. Es kann sich um Dimere, Trimere oder Oligomere aus vier oder mehr monomeren Silanen oder Mischungen davon handeln. Derartige Siloxane, insbesondere Aminosiloxane, sind auch kommerziell erhältlich, z.B. als Dynasylan^{®} HDYROSIL 2627, Dynasylan^{®} HDYROSIL 2776 oder Dynasylan^{®} HDYROSIL 2929 von Degussa AG, Deutschland.

Als Cosolventien werden mit Wasser mischbare Lösungsmittel, wie Alkohole oder Ether oder Ketone, verstanden. Es ist jedoch bevorzugt, dass derartige Lösungsmittel lediglich in einer kleinen Menge, d.h. typischerweise weniger als 10 Gew.-% bezogen auf das Wasser, verwendet werden. Besonders bevorzugt ist die Zusammensetzung -abgesehen von Spuren von Alkoholen, welche sich aus der Hydrolyse der in der wässrigen Zusammensetzung eingesetzten Alkoxyilanen ergeben- frei von derartigen Cosolventien. Wird ein größerer Gehalt an Lösungsmittel eingesetzt, verstärkt sich die VOC-Problematik wiederum, deren Vermeidung ja mit ein Hauptgrund für den Einsatz von wässrigen Zusammensetzungen darstellt.

Es kann sich um eine einkomponentige oder zweikomponentige wässrige Haftvermittlerzusammensetzung handeln, wobei es sich besonders bevorzugt um eine einkomponentige wässrige Haftvermittlerzusammensetzung handelt.

Bei der bevorzugten einkomponentigen wässrigen Haftvermittlerzusammensetzung sind die vorstehend beschriebenen Silane, Netzmittel und Wasser in der einzigen Komponente enthalten. Die zweikomponentige wässrige Haftvermittlerzusammensetzung besteht aus einer Silankomponente A, auch Silan-Premix genannt, die die vorstehend beschriebenen Silane und optional Netzmittel enthält, und einer wässrigen Komponente B, auch wässriger Premix genannt, die Wasser enthält. Die einkomponentige wässrige Haftvermittlerzusammensetzung zeichnet sich durch ausgezeichnete Lagerstabilität aus.

Wenn zu der die Silane enthaltenden Zusammensetzung Wasser zugegeben wird, können die Silane mit der Zeit, meist in wenigen Minuten, hydrolysiert und/oder kondensiert werden. Die Zusammensetzung kann dann neben den darin enthaltenen Silanen auch Hydrolyse- und/oder Kondensationprodukte dieser Silane oder bei fortgeschrittener Umsetzung gegebenenfalls nur noch Hydrolyse- und/oder Kondensationprodukte der enthaltenen Silane wie vorstehend beschrieben enthalten.

Die bevorzugte einkomponentige wässrige Zusammensetzung wird bevorzugt folgendermassen hergestellt. Zunächst wird Wasser vorgelegt, zu dem vorzugsweise zusätzliche Bestandteile, wie mindestens ein Netzmittel und, abhängig von der Ausführungsform, weitere Bestandteile unter Rühren zugesetzt werden. Die Zugabe erfolgt zweckmässigerweise bei Raumtemperatur, gegebenenfalls kann der Rührvorgang auch bei erhöhter Temperatur erfolgen.

Die zusätzlichen Bestandteile werden vorzugweise nacheinander zugegeben und vor Zugabe des nächsten Bestandteils wird bevorzugt solange gerührt, bis sich der Bestandteil in Wasser aufgelöst bzw. homogen verteilt hat. Die Reihenfolge der Zugabe der möglichen zusätzlichen Bestandteile ist beliebig.

Es wird zweckmässigerweise eine gewisse Zeit gerührt, um eine homogene Mischung zu erhalten.

Die erfindungsgemässe ein- oder zweikomponentige wässrige Zusammensetzung eignet sich insbesondere als Haftvermittler oder Primer, vorzugsweise als Primer für Kleb- und Dichtstoffe. Durch die Verwendung eines derartigen Primers wird die Haftung verbessert.

Als Klebstoff kann grundsätzlich jeder Klebstoff verwendet werden. Vorteilhafte Haftverbesserungen zeigen sich insbesondere bei Polyurethan-Klebstoffen, insbesondere solche, die Isocyanatgruppen aufweisende Polyurethan-Präpolymere enthalten. Derartige Polyurethanklebstoffe sind kommerziell breit erhältlich, z.B. Sikaflex^{®} von Sika Schweiz AG. Die erfindungsgemässe wässrige Zusammensetzung ist besonders geeignet für 1K-Polyurethan-Klebstoffe.

Zum Verkleben oder Abdichten von zwei oder mehr Substraten eignet sich somit ein Verfahren, bei dem die erfindungsgemässe wässrige Haftvermittlerzusammensetzung als Vorbehandlung auf mindestens ein Substrat aufgebracht und abgelüftet wird. Anschliessend werden die Substrate mit einem Klebstoff oder Dichtstoff, vorzugsweise einem 1K PolyurethanKlebstoff, verklebt oder abgedichtet.

Die Haftvermittlerzusammensetzungen lassen sich vielseitig verwenden. In einer besonders bevorzugten Ausführungsform stellen sie einen Primer oder einen Haftvermittlervoranstrich dar.

In einem weiteren Aspekt betrifft die vorliegende Erfindung ein Verfahren zur Verklebung oder zum Abdichten. Dieses Verfahren umfasst die folgenden Schritte:
i) Applikation einer Haftvermittlerzusammensetzung, wie sie vorgängig beschrieben wurde, auf ein zu verklebendes oder abzudichtendes Substrat S1
ii) Applikation eines Klebstoffes oder Dichtstoffes auf die Zusammensetzung, welche sich auf dem Substrat S1 befindet
iii) Kontaktieren des Klebstoffs oder Dichtstoffes mit einem zweiten Substrat S2;
oder
i') Applikation einer Haftvermittlerzusammensetzung, wie sie vorgängig beschrieben wurde, auf ein zu verklebendes oder abzudichtendes Substrat S1
ii') Applikation eines Klebstoffes oder Dichtstoffes auf die Oberfläche eines zweiten Substrates S2
iii') Kontaktieren des Klebstoffes oder Dichtstoffes mit der Zusammensetzung, welche sich auf dem Substrat S1 befindet;
oder
i") Applikation einer Haftvermittlerzusammensetzung, wie sie vorgängig beschrieben wurde, auf ein zu verklebendes oder abzudichtendes Substrat S1
ii") Applikation eines Klebstoffes oder Dichtstoffes zwischen die Oberflächen des Substrates S1 und S2.

Das zweite Substrat S2 besteht hierbei aus demselben oder unterschiedlichem Material wie das Substrat S1.

Typischerweise schliesst sich anschliessend an den Schritt iii), iii') oder ii") ein Schritt iv) des Aushärtens des Kleb- oder Dichtstoffes an.

Als Kleb- oder Dichtstoff kann grundsätzlich jeder Klebstoff oder Dichtstoff verwendet werden. Die Auswahl richtet sich unter anderem nach der Offenzeit und den mechanischen Erfordernissen an den gebildeten Verbund. Es hat sich gezeigt, dass dieses Verfahren insbesondere gut für Polyurethan-Kleb- oder Dichtstoffe, insbesondere für Polyurethanklebstoffe, welche mindestens ein Isocyanatgruppen aufweisendes Polyurethanprepolymer enthalten, ist. Derartige Polyurethanklebstoffe härten unter dem Einfluss von Luftfeuchtigkeit über eine Vernetzungsreaktion der Isocyanatgruppen aus und sind kommerziell breit erhältlich, insbesondere unter dem Namen Sikaflex^{®} von Sika Schweiz AG.

Vor dem Schritt ii), ii') oder ii") kann allenfalls ein Schritt des Abwischens mit einem trocknen Tuch (in der Fachsprache vielfach als "wipe off" bezeichnet) erfolgen. Das immer erfolgende Aufbringen mittels einem getränkten Tuchs oder einer ähnlichen Methode wird als "wipe on" bezeichnet. Entsprechend wird die Kombination von Aufbringen und Abwischen als "wipe on/off" bezeichnet.

Mit der Applikation des Klebstoffes oder Dichtstoffes kann zugewartet werden bis die Haftvermittlerzusammensetzung abgelüftet ist. Es hat sich jedoch erstaunlicherweise gezeigt, dass die Applikation des Klebstoffes oder des Dichtstoffes in den meisten Fällen auch direkt auf den noch feuchten Haftvermittlerzusammensetzungsfilm, d.h. "nass in nass", möglich ist, ohne dass dies bemerkenswerte Nachteile in der Haftung oder der Mechanik des ausgehärteten Dicht- oder Klebstoffes zur Folge hätte.

Das Substrat S1 kann gleich oder verschieden von Substrat S2 sein. Geeignete Substrate S1 oder S2 sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, Edelmetalle wie Silber, verzinkte Metalle; organische Substrate wie Holz, Kunststoffe wie PVC, Polycarbonate, PMMA, Polyester, Epoxidharze; beschichtete Substrate wie pulverbeschichtete Metalle oder Legierungen; sowie Farben und Lacke. Insbesondere bevorzugt als Substrate S1 oder S2 sind Glas, Glaskeramik, Siebdruck oder Silberdruck auf Glas oder Glaskeramik, Aluminium und Lacke, insbesondere in der Form als Automobillack.

Die Substrate können bei Bedarf vor dem Applizieren des Klebstoffes oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Aus einem derartigen Verfahren zur Verklebung oder zum Abdichten resultiert ein Artikel. Da das Verfahren breit eingesetzt werden kann, zum Beispiel in der industriellen Verfertigung oder im Tief- oder Hochbau, ist auch dieser Artikel sehr vielfältiger Natur.

Insbesondere handelt es sich hierbei um einen Artikel, welcher ein Bauwerk, ein Industriegut oder ein Transportmittel ist. Insbesondere stellt er ein Gebäude, oder ein Teil davon dar. Oder der Artikel stellt insbesondere ein Transportmittel, insbesondere ein Automobil, Bus, Lastkraftwagen, Schienenfahrzeug, ein Schiff oder ein Luftfahrzeug dar.

Besonders geeignet ist die erfindungsgemässe wässrige Zusammensetzung als Vorbehandlung zum Verkleben von Scheiben, insbesondere im Fahrzeugbau bzw. zum Direct Glazing. Daher ist in einer bevorzugten Ausführungsform ein Substrat Glas oder Glaskeramik und das zweite Substrat ein Lack oder ein lackiertes Metall oder eine lackierte Metalllegierung.

Der Einsatz von Mercaptosilanen in der wässrigen Zusammensetzung führt zu einer starken Haftverbesserung von 1K Polyurethanklebstoffen auf Silber oder auf Silber basierenden Zusammensetzungen oder Legierungen. Es hat sich gezeigt, dass das beschriebene Verfahren insbesondere gut geeignet ist zum Verkleben von Scheiben mit integrierter Antenne oder anderen elektronischen Bauteilen. Derartige Antennenanschlusskontakte oder andere elektronische Bauteile sind typischerweise aus Silber oder auf Silber basierenden Zusammensetzungen oder Legierungen, auf der Scheibe vorhanden.

### Beispiele

Die Erfindung wird durch nachstehende Beispiele weiter erläutert, die die Erfindung aber in keiner Weise einschränken sollen. Sofern nicht anders angegeben, beziehen sich alle Angaben auf das Gewicht. Insbesondere bedeuten die Zahlen in den Tabellen zu den jeweiligen Zusammensetzungen Gewichtsprozente, bezogen auf das gesamte Gewicht der jeweiligen Beispielzusammensetzung.

### Verwendete Rohstoffe

**Tabelle 1: Verwendete Rohstoffe.**

| | |
|---|---|
| Sil A1110 | 3-Aminopropyl-trimethoxysilan |
| | Silquest^{®} A1110, Momentive Performance Materials |
| Sil A1120 | N-(2-Aminoethyl)-3-aminopropyl-trimethoxysilan |
| | Silquest^{®} A1120, Momentive Performance Materials |
| Sil A1170 | Bis(trimethoxysilylpropyl)amin |
| | Silquest^{®} A1170, Momentive Performance Materials |
| Sil A187 | 3-Glycidoxypropyl-trimethoxysilan |
| | Silquest^{®} A187, Momentive Performance Materials |
| Sil A189 | 3-Mercaptopropyl-trimethoxysilan |
| | Silquest^{®} A189, Momentive Performance Materials |
| A-Link 597 | Tris(3-(trimethoxysilyl)propyl)isocyanurat |
| | Silquest^{®} A-Link^{®} 597, Momentive Performance Materials |
| KR 44 | Titanat; 2-Propanolato, tris(3,6-diaza)hexanolato Titanium(IV), Ken-React^{®} KR 44, Kenrich Petrochemicals |
| Hydropalat | Netzmittel; modifiziertes natürliches Öl, frei von Silicon, Hydropalat^{®} 3037, Cognis, Deutschland |
| Byk 349 | Netzmittel; Polyether-modifiziertes Siloxan, BYK-349, BYK Chemie GmbH, Deutschland |
| CHP | Netzmittel; N-Cyclohexyl-2-pyrrolidon |
| TOU | Netzmittel; 2,5,7,10,-Tetraoxaundecan |
| Essigsäure | Essigsäure, 99% |
| TMG | Tetramethylguanidin |

### Herstellung der Zusammensetzungen

Alle Zusammensetzungen C1 bis C10 gemäss Tabellen 2 und 3 wurden in 100 mL Laborglasflaschen hergestellt.

Die Zusammensetzungen C1 bis C4 und C9 bis C10 wurden als Wässriger Premix und Silan-Premix hergestellt.

Der wässrige Premix wurde jeweils so hergestellt, dass Wasser vorgelegt wurde, das Netzmittel hinzugefügt wurde, Säure zugegeben wurde und unter Mischen homogenisiert wurde.

Der jeweilige Silan-Premix wurde in einer gesonderten Flasche hergestellt, indem das Netzmittel CHP vorgelegt wurde und in der folgende Reihenfolge die weiteren Bestandteile, falls eingesetzt, unter Rühren zugegeben wurden: Sil A189, Sil A187, Sil A1170, A-Link 597, Sil A1120, Byk 349. Anschliessend wurde die Mischung in einem Laborshaker homogenisiert.

Der Silan-Premix wurde dann unter Rühren innerhalb von ca. 10 Sekunden dem wässrigen Premix zugegeben. Anschliessend wurde zwei Minuten weitergerührt und in einem Laborshaker homogenisiert.

Die Bestandteile der Zusammensetzung C8 wurde in einem einzigen Gefäss in der in der Tabelle angegeben Reihenfolge unter Rühren nach und nach zugegeben. Anschliessend wurde zwei Minuten weitergerührt und in einem Laborshaker homogenisiert.

**Tabelle 2: Zusammensetzungen C1-C4 und C9-C10; "n/m" bedeutet, dass der Wert nicht gemessen wurde.**

| | Zutaten (Gew.-%) | **C1** (Ref.) | **C2** | **C3** | **C4** (Ref.) | **C9** (Ref.) | **C10** (Ref.) |
|---|---|---|---|---|---|---|---|
| Wässriger Premix | Entionisiertes Wasser | 92.5 | 95.05 | 97.4 | 93.8 | 97.05 | 97.5 |
| | Hydropalat | 0.5 | 0.5 | 0.5 | 0.5 | 0.5 | 0.5 |
| | Essigsäure | 4.4 | 2.0 | 0.2 | 4.4 | 0.2 | 0.4 |
| Silan Premix | CHP | 0.9 | 0.9 | 0.9 | 0.9 | 2 | 0.9 |
| | Byk 349 | 0.1 | 0.1 | 0.1 | 0.1 | 0.1 | 0.1 |
| | Sil A189 | 0.3 | 0.65 | 0.3 | 0.3 | - | - |
| | Sil A187 | - | 0.65 | 0.3 | - | - | 0.3 |
| | Sil A1170 | 0.65 | 0.15 | - | - | - | - |
| | A-Link 597 | - | - | 0.3 | - | - | 0.3 |
| | Sil A1120 | 0.65 | - | - | - | 0.15 | - |
| Summe | | 100 | 100 | 100 | 100 | 100 | 100 |
| pH (der kombinierten Premix) | | 3.7 | 2.9 | 4.4 | n/m | n/m | 4.0 |

**Tabelle 3: Zusammensetzung C8.**

| Zutaten (Gew.-%) | **C8** (Ref.) |
|---|---|
| Entionisiertes Wasser | 99.35 |
| TOU | - |
| TMG | - |
| KR44 | 0.4 |
| Sil A187 | 0.25 |
| Sil A1110 | - |
| Sil A1120 | - |
| Summe | 100 |
| pH | 10.2 |

### Prüfung

Die gebildeten wässrigen Zusammensetzungen C1 bis C8 wurden hinsichtlich der Hitzestabilität der Verklebungen auf verschiedenen Substraten als Haftvermittler in Kombination mit verschiedenen Klebstoffen geprüft. Dazu wurden Verklebungen, die 7 Tage (d) bei Raumtemperatur (RT) oder 7 bis 34 Tage bei 90°C gelagert wurden, nach dem unten angegebenen Verfahren geprüft.

Als Klebstoff wurde ein Sikaflex^{®}-250 verwendet, bei dem es sich um einen handelsüblichen einkomponentigen feuchtigkeitshärtenden Polyurethanklebstoff handelt, welcher Polyurethanpräpolymere mit Isocyanatgruppen enthält und bei Sika Schweiz AG kommerziell erhältlich ist.

Als Substrate wurden verwendet: "Floatglass (Sn)": Floatglas, bei dem die Zinnseite für Haftungsprüfung verwendet wurde, Rocholl, Deutschland; "Floatglass (Air)": Floatglas, bei dem die Luftseite für Haftungsprüfung verwendet wurde, Rocholl, Deutschland; "VSG": VSG Keramik, Ferro 14279, Rocholl, Deutschland; "ESG": ESG Keramik, Ferro 14251, Rocholl, Deutschland; "Frit 3402": ESG Keramik, Ferro AD 3402, Rocholl, Deutschland.

Alle Substratuntergründe wurden unmittelbar vor der Applikation der Haftvermittlerzusammensetzung durch Abwischen mittels eines Zellulosetuches (Tela^{®}), welches mit einem Gemisch Isopropanol/Wasser (2:1) getränkt wurde, gereinigt und mindestens 2 Minuten vor der Applikation der Haftvermittlerzusammensetzung abgelüftet.

Die wässrigen Zusammensetzungen wurden mittels eines damit getränktem Zellulosetuches (Tela^{®}, Tela-Kimberly Switzerland GmbH) auf das jeweilige Substrat aufgetragen und 10 Minuten abgelüftet ("wipe on"). Zu Vergleichszwecken wurden identische Applikationen vorgenommen, die aber 3 Minuten nach Applikation mit einem trockenen Zellulosetuch (Tela^{®}, Tela-Kimberly Switzerland GmbH) abgewischt wurden ("wipe on/off"). Eine Dreiecksraupe von dem Klebstoff wurde bei 23 ± 2°C und 50% rel. Luftfeuchtigkeit mittels Auspresskartusche und Düse aufgetragen. Der Klebstoff selber wurde vor Applikation während 2 h bei 60°C in einer verschlossenen Kartusche temperiert.

Die ausgehärtete Verklebung mit dem Klebstoff wurde nach einer Aushärtezeit von 7 Tagen Klimaraumlagerung (23°C, 50% rel. Luftfeuchtigkeit) (RT), sowie nach einer anschliessenden Hitzelagerung (90°C) im Ofen während 7 bis 34 Tagen, getestet.

Die Haftung des Klebstoffes wurde mittels ,Raupenhaftungstest' geprüft. Hierbei wird die Raupe am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Platzieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebstoff (Kohäsionsbruch). Die Bewertung der Hafteigenschaften erfolgt durch visuelle Bestimmung des kohäsiven Anteils der Haftfläche.

Je höher der Anteil an kohäsivem Bruch ist, umso besser wird die Verklebung eingeschätzt. Testresultate mit Kohäsionsbrüchen von weniger als 70% gelten typischerweise als ungenügend. Die Ergebnisse sind in Tabellen 4 bis 9 zusammengefasst.

Aus den Ergebnissen ist deutlich ersichtlich, dass die erfindungsgemässen wässrigen Haftvermittlerzusammensetzungen auch nach längerer Hitzelagerung gute Ergebnisse erzielen, während die als Vergleich eingesetzten nicht erfindungsgemässen Haftvermittler eine deutliche Verminderung der Performance bei längerer Hitzelagerung zeigen.

**Tabelle 4: Haftungsresultate auf Floatglass (Air).**

| **Floatglass (Air)** | | **RT (d)** | **90°C (d)** | | | | |
|---|---|---|---|---|---|---|---|
| **Vorbehandlung** | ***wipe*** | **7** | **7** | **14** | **21** | **28** | **34** |
| **C1** (Ref.) | *on* | 100 | 100 | 80 | 15 | 15 | 5 |
| | *on*/*off* | 100 | 50 | 65 | 25 | 15 | 5 |
| **C2** | *on* | 100 | 100 | 100 | 100 | 100 | 100 |
| | *on*/*off* | 100 | 100 | 100 | 100 | 100 | 98 |
| **C3** | *on* | 100 | 100 | 100 | 100 | 100 | 98 |
| | *on*/*off* | 100 | 100 | 100 | 100 | 100 | 95 |
| **C4** (Ref.) | *on*/*off* | 95 | 80 | 40 | 5 | 0 | 0 |
| **C9** (Ref.) | *on*/*off* | 100 | 100 | 40 | 60 | 20 | 0 |
| **C10** (Ref.) | *on*/*off* | 100 | 100 | 30 | 5 | n/m | n/m |

**Tabelle 5: Haftungsresultate auf Floatglass (Sn).**

| **Floatglass (Sn)** | | **RT (d)** | **90°C (d)** | | | | |
|---|---|---|---|---|---|---|---|
| **Vorbehandlung** | ***wipe*** | **7** | **7** | **14** | **21** | **28** | **34** |
| **C1** (Ref.) | *on* | 100 | 100 | 85 | 30 | 35 | 5 |
| | *on*/*off* | 100 | 60 | 20 | 5 | 5 | 0 |
| **C2** | *on* | 100 | 100 | 100 | 100 | 100 | 100 |
| | *on*/*off* | 100 | 100 | 100 | 98 | 75 | 30 |
| **C3** | *on* | 100 | 100 | 100 | 100 | 100 | 100 |
| | *on*/*off* | 100 | 98 | 100 | 98 | 98 | 95 |
| **C4** (Ref.) | *on*/*off* | 100 | 95 | 40 | 10 | 5 | 0 |
| **C8** (Ref.) | *on* | 20 | 100 | 100 | 100 | 100 | 100 |
| | *on*/*off* | 10 | 100 | 100 | 100 | 100 | 100 |

**Tabelle 6: Haftungsresultate auf VSG.**

| **VSG** | | **RT (d)** | **90°C (d)** | | | | |
|---|---|---|---|---|---|---|---|
| **Vorbehandlung** | ***wipe*** | **7** | **7** | **14** | **21** | **28** | **34** |
| **C1** (Ref.) | *on* | 100 | 100 | 95 | 60 | 60 | 80 |
| | *on*/*off* | 98 | 100 | 95 | 5 | 5 | 0 |
| **C2** | *on* | 100 | 100 | 100 | 100 | 100 | 100 |
| | *on*/*off* | 85 | 100 | 100 | 90 | 90 | 50 |
| **C3** | *on* | 100 | 100 | 100 | 100 | 100 | 100 |
| | *on*/*off* | 70 | 100 | 95 | 95 | 85 | 70 |
| **C4** (Ref.) | *on*/*off* | 10 | n/m | n/m | n/m | n/m | n/m |
| **C8** (Ref.) | *on* | 20 | n/m | n/m | n/m | n/m | n/m |
| | *on*/*off* | 30 | n/m | n/m | n/m | n/m | n/m |
| **C9** (Ref.) | *on*/*off* | 5 | n/m | n/m | n/m | n/m | n/m |

**Tabelle 7: Haftungsresultate auf ESG.**

| **ESG** | | **RT (d)** | **90°C (d)** | | | | |
|---|---|---|---|---|---|---|---|
| **Vorbehandlung** | ***wipe*** | **7** | **7** | **14** | **21** | **28** | **34** |
| **C1** (Ref.) | *on* | 100 | 100 | 100 | 45 | 85 | 5 |
| | *on*/*off* | 100 | 100 | 90 | 30 | 10 | 5 |
| **C2** | *on* | 100 | 100 | 100 | 100 | 100 | 100 |
| | *on*/*off* | 90 | 100 | 100 | 100 | 100 | 100 |
| **C3** | *on* | 100 | 100 | 100 | 100 | 100 | 100 |
| | *on*/*off* | 80 | 100 | 100 | 100 | 100 | 100 |
| **C4** (Ref.) | *on*/*off* | 0 | n/m | n/m | n/m | n/m | n/m |

**Tabelle 8: Haftungsresultate auf Frit 3402.**

| **Frit 3402** | | **RT (d)** | **90°C (d)** | | | | |
|---|---|---|---|---|---|---|---|
| **Vorbehandlung** | ***wipe*** | **7** | **7** | **14** | **21** | **28** | **34** |
| **C1** (Ref.) | *on* | 100 | 100 | 100 | 100 | 100 | 100 |
| | *on*/*off* | 100 | 100 | 100 | 100 | 95 | 80 |
| **C2** | *on* | 100 | 100 | 100 | 100 | 100 | 100 |
| | *on*/*off* | 98 | 100 | 100 | 100 | 100 | 98 |
| **C3** | *on* | 100 | 100 | 100 | 100 | 100 | 100 |
| | *on*/*off* | 85 | 100 | 100 | 100 | 98 | 90 |
| **C4** (Ref.) | *on*/*off* | 25 | n/m | n/m | n/m | n/m | n/m |

**Tabelle 9: Haftungsresultate auf allen Untergründen (Durchschnitt).**

| **Durchschnitt** | | **RT (d)** | **90°C (d)** | | | | |
|---|---|---|---|---|---|---|---|
| **Vorbehandlung** | ***wipe*** | **7** | **7** | **14** | **21** | **28** | **34** |
| **C1** (Ref.) | *on* | 100 | 100 | 92 | 50 | 59 | 39 |
| | *on*/*off* | 99.6 | 82 | 74 | 33 | 26 | 18 |
| **C2** | *on* | 100 | 100 | 100 | 100 | 100 | 100 |
| | *on*/*off* | 94.6 | 100 | 100 | 97.6 | 93 | 75.2 |
| **C3** | *on* | 100 | 100 | 100 | 100 | 100 | 99.6 |
| | *on*/*off* | 87 | 99.6 | 99 | 98.6 | 96.2 | 89 |

## Patentansprüche

1. Wässrige Zusammensetzung, umfassend
a) mindestens ein Epoxysilan, das mindestens eine Epoxygruppe und mindestens eine an Si gebundene hydrolysierbare Gruppe aufweist,
b) mindestens ein nichtionisches Netzmittel,
und
c1) 0.2 bis 2 Gew.-%, bezogen auf das Gesamtgewicht der wässrigen Zusammensetzung, mindestens eines Mercaptosilans, das mindestens eine Mercaptogruppe und mindestens eine an Si gebundene hydrolysierbare Gruppe aufweist, sowie so viel einer wasserlöslichen Säure, dass der pH der resultierenden Zusammensetzung zwischen 1 und 6 liegt, mit der Massgabe, dass das Epoxysilan in einer Menge von 0.2 bis 1 Gew.-%, bezogen auf das Gesamtgewicht der wässrigen Zusammensetzung, vorliegt.

2. Zusammensetzung nach Anspruch 1, **dadurch gekennzeichnet, dass** das mindestens eine Netzmittel ausgewählt ist aus Emulgatoren oder Tensiden der Gruppe Polyether, Polyethersiloxane, Pyrrolidone und modifizierte natürliche Öle.

3. Zusammensetzung nach Anspruch 1 oder Anspruch 2, **dadurch gekennzeichnet, dass** das Epoxysilan Glycidoxypropyltrimethoxysilan und/oder Glycidoxypropyltriethoxysilan umfasst.

4. Zusammensetzung nach einem der Ansprüche 1 bis 3, **dadurch gekennzeichnet, dass** die Zusammensetzung weitere Organosilane oder Oligomere dieser Organosilane enthält, die mindestens eine an Si gebundene hydrolysierbare Gruppe aufweisen und mindestens eine weitere funktionelle Gruppe ausgewählt aus primären Aminogruppen, sekundären Aminogruppen, Hydroxylgruppen und Isocyanuratgruppen aufweisen.

5. Zusammensetzung nach einem der Ansprüche 1 bis 4, **dadurch gekennzeichnet, dass** das Mercaptosilan Mercaptopropyltrimethoxysilan und/oder Mercaptopropyltriethoxysilan umfasst.

6. Zusammensetzung nach einem der Ansprüche 1 bis 5, **dadurch gekennzeichnet, dass** die Säure eine Carbonsäure umfasst, insbesondere Essigsäure.

7. Zusammensetzung nach einem der Ansprüche 1 bis 6, **dadurch gekennzeichnet, dass** die Zusammensetzung eine einkomponentige wässrige Zusammensetzung ist, die 90-98 Gew.-%, bezogen auf die gesamte Zusammensetzung, Wasser umfasst.

8. Zusammensetzung nach einem der Ansprüche 1 bis 5, **dadurch gekennzeichnet, dass** die Zusammensetzung Wasser umfasst, sowie:
0.3 bis 1 Gew.-% Glycidoxypropyltrimethoxysilan, bezogen auf das Gesamtgewicht der wässrigen Zusammensetzung,
0.1 bis 2 Gew.-% mindestens eines Netzmittels ausgewählt aus Polyethern, Polyethersiloxanen, Pyrrolidonen und modifizierten natürlichen Ölen,
0.3 bis 1 Gew.-% Mercaptopropyltrimethoxysilan, bezogen auf das Gesamtgewicht der wässrigen Zusammensetzung,
0 bis 0.3 Gew.-% mindestens eines Amino- oder Isocyanuratosilans, bezogen auf das Gesamtgewicht der wässrigen Zusammensetzung, sowie so viel einer wasserlöslichen Säure, dass der pH der resultierenden Zusammensetzung zwischen 2.5 und 5 liegt.

9. Verwendung einer wässrigen Zusammensetzung nach einem der Ansprüche 1 bis 8 als Haftvermittler oder Primer.

10. Verwendung nach Anspruch 9, wobei das zu behandelnde Substrat ein Glas- oder Glaskeramiksubstrat ist.

## Claims

1. Aqueous composition comprising
a) at least one epoxysilane having at least one epoxy group and at least one Si-bonded hydrolysable group,
b) at least one nonionic wetting agent,
and
c1) 0.2% to 2% by weight, based on the total weight of the aqueous composition, of at least one mercaptosilane having at least one mercapto group and at least one Si-bonded hydrolysable group, and a sufficient amount of a water-soluble acid that the pH of the resulting composition is between 1 and 6, with the proviso that the epoxysilane is present in an amount of 0.2% to 1% by weight, based on the total weight of the aqueous composition.

2. Composition according to Claim 1, **characterized in that** the at least one wetting agent is selected from emulsifiers and surfactants from the group of polyethers, polyethersiloxanes, pyrrolidones and modified natural oils.

3. Composition according to Claim 1 or Claim 2, **characterized in that** the epoxysilane comprises glycidoxypropyltrimethoxysilane and/or glycidoxypropyltriethoxysilane.

4. Composition according to any of Claims 1 to 3, **characterized in that** the composition comprises further organosilanes or oligomers of these organosilanes that have at least one Si-bonded hydrolysable group and have at least one further functional group selected from primary amino groups, secondary amino groups, hydroxyl groups and isocyanurate groups.

5. Composition according to any of Claims 1 to 4, **characterized in that** the mercaptosilane comprises mercaptopropyltrimethoxysilane and/or mercaptopropyltriethoxysilane.

6. Composition according to any of Claims 1 to 5, **characterized in that** the acid comprises a carboxylic acid, especially acetic acid.

7. Composition according to any of Claims 1 to 6, **characterized in that** the composition is a onecomponent aqueous composition comprising 90-98% by weight, based on the overall composition, of water.

8. Composition according to any of Claims 1 to 5, **characterized in that** the composition comprises water and:
0.3% to 1% by weight of glycidoxypropyltrimethoxysilane, based on the total weight of the aqueous composition,
0.1% to 2% by weight of at least one wetting agent selected from polyethers, polyethersiloxanes, pyrrolidones and modified natural oils,
0.3% to 1% by weight of mercaptopropyltrimethoxysilane, based on the total weight of the aqueous composition,
0% to 0.3% by weight of at least one amino- or isocyanuratosilane, based on the total weight of the aqueous composition, and a sufficient amount of a water-soluble acid that the pH of the resulting composition is between 2.5 and 5.

9. Use of an aqueous composition according to any of Claims 1 to 8 as adhesion promoter or primer.

10. Use according to Claim 9, wherein the substrate to be treated is a glass or glass ceramic substrate.

## Revendications

1. Composition aqueuse, comprenant
a) au moins un époxysilane, qui présente au moins un groupe époxy et au moins un groupe hydrolysable lié à Si,
b) au moins un agent mouillant non ionique et
c1) 0,2 à 2% en poids, par rapport au poids total de la composition aqueuse, d'au moins un mercaptosilane, qui présente au moins un groupe mercapto et au moins un groupe hydrolysable lié à Si ainsi qu'un acide soluble dans l'eau en une quantité telle que le pH de la composition résultante se situe entre 1 et 6, sous réserve que l'époxysilane soit présent en une quantité de 0,2 à 1% en poids, par rapport au poids total de la composition aqueuse.

2. Composition selon la revendication 1, **caractérisée en ce que** ledit au moins un agent mouillant est choisi parmi les émulsifiants ou les tensioactifs du groupe formé par les polyéthers, les polyéthersiloxanes, les pyrrolidones et les huiles naturelles modifiées.

3. Composition selon la revendication 1 ou 2, **caractérisée en ce que** l'époxysilane comprend le glycidoxypropyltriméthoxysilane et/ou le glycidoxypropyltriéthoxysilane.

4. Composition selon l'une quelconque des revendications 1 à 3, **caractérisée en ce que** la composition contient d'autres organosilanes ou des oligomères de ces organosilanes qui présentent au moins un groupe hydrolysable lié à Si et qui présentent au moins un autre groupe fonctionnel choisi parmi les groupes amino primaire, les groupes amino secondaire, les groupes hydroxyle et les groupes isocyanurate.

5. Composition selon l'une quelconque des revendications 1 à 4, **caractérisée en ce que** le mercaptosilane comprend le mercaptopropyltriméthoxysilane et/ou le mercaptopropyltriéthoxysilane.

6. Composition selon l'une quelconque des revendications 1 à 5, **caractérisée en ce que** l'acide comprend un acide carboxylique, en particulier l'acide acétique.

7. Composition selon l'une quelconque des revendications 1 à 6, **caractérisée en ce que** la composition est une composition aqueuse à un composant qui comprend 90-98% en poids d'eau, par rapport à la composition totale.

8. Composition selon l'une quelconque des revendications 1 à 5, **caractérisée en ce que** la composition comprend de l'eau ainsi que :
- 0,3 à 1% en poids de glycidoxypropyltriméthoxysilane, par rapport au poids total de la composition aqueuse,
- 0,1 à 2% en poids d'au moins un agent mouillant choisi parmi les polyéthers, les polyéthersiloxanes, les pyrrolidones et les huiles naturelles modifiées,
- 0,3 à 1% en poids de mercaptopropyltriméthoxysilane, par rapport au poids total de la composition aqueuse,
- 0 à 0,3% en poids d'au moins un aminosilane ou isocyanuratosilane, par rapport au poids total de la composition aqueuse,
- ainsi qu'un acide soluble dans l'eau en une quantité telle que le pH de la composition résultante se situe entre 2,5 et 5.

9. Utilisation d'une composition aqueuse selon l'une quelconque des revendications 1 à 8 comme promoteur d'adhérence ou apprêt.

10. Utilisation selon la revendication 9, le substrat à traiter étant un substrat en verre ou en vitrocéramique.
